Europäisches Patentamt

(19) European Patent Office

Office européen des brevets

(11) Publication number: **0 085 869**
**A2**

## (12) EUROPEAN PATENT APPLICATION

(21) Application number: 83100528.5

(22) Date of filing: 21.01.83

(51) Int. Cl.³: **C 09 D 11/02**
**//B41J3/04**

(30) Priority: 04.02.82 IT 6712982

(43) Date of publication of application:
17.08.83 Bulletin 83/33

(84) Designated Contracting States:
CH DE FR GB LI

(71) Applicant: Ing. C. Olivetti & C., S.p.a.
Via G. Jervis 77
I-10015 Ivrea (Turin)(IT)

(72) Inventor: Knirsch, Franco
Via Pavone 4C
I-10010 Banchette (Torino)(IT)

(72) Inventor: Gianolini, Giovanni
Via A. Volta 14
I-21040 Lozza (Varese)(IT)

(74) Representative: Jacobacci, Filippo et al,
c/o JACOBACCI-CASETTA & PERANI S.p.A. Via Alfieri 17
I-10121 Torino(IT)

(54) Ink for selective ink-jet printing.

(57) The ink is of the type essentially consisting of an aqueous solution of a dye, a humectant of glycol type, an anti-mold preservative and a pH-regulator. In the proposed ink, the humectant is a polyglycol, preferably polyethylene glycol of mol.wt. of about 200, in amount not exceeding 3 wt. %. The pH-regulator is an organic base, particularly monoethanolamine, or the hydroxide or carbonate of an alkali metal. The dye is a direct dye. The ink has a low viscosity and high surface tension. The printed marks are clear-cut and quick drying. Clogging of the jet nozzle is avoided for a long period of inactivity.

EP 0 085 869 A2

"Ink for selective ink-jet printing".

This invention relates to inks particularly suitable for a selective ink-jet printing method. In particular, the invention relates to inks for ink-jet printers wherein the ink-jet through a nozzle is produced by a selectively excited piezoelectric element.

The ink for such printers shall have physicochemical characteristics such as to warrant formation of uniform droplets, to secure a rapid drying on the paper and to avoid at the same time clogging of the nozzle consequent to formation of incrustations.

Inks are known, for selective ink-jet printers, consisting of an aqueous solution of a dye, a humectant, an anti-mold preserving agent and a pH-regulator. The printed marks obtained with these inks are good and present acceptable drying time only when special grades of paper are used.

The technical problem which is to be solved by the present invention consists in providing an ink which is capable of drying on the paper within an extremely short time, does not produce clogging over a relatively long time, and allows obtention of marks which are clear-cut and present a high optical intensity on a wide range of grades of writing paper.

A particular object of the invention is to provide an ink of a viscosity not exceeding 1.5 cPs, of a density of the order of 1.0 g/ml, and of a high surface tension, of the order of 55-65 dine.cm, all without the use of badly smelling or toxic components.

The ink according to this invention is basically characterized in that the humectant consists of a polyglycol in a proportion not exceeding 3% referred to the weight of the ink, and that the pH-regulator is an organic base or the hydroxide or carbonate of an alkalimetal in a proportion confering to the ink a pH of from 7.5 to 11. The preferred pH-regulator is monoethanolamine.

Owing to the low percent content of the humectant (polyglycol) an ink having a low viscosity and a high surface tension is obtained. The dot mark is clear-cut and dries within 10 seconds. The preferred humectant is polyethylene glycol of molecular weight of the order of 200, such as e.g. the "Carbowax 200" (Du Pont). The weight ratio water/humectant should preferably not exceed 80:1. Moreover, preferably, the weight ratio dye/humectant is from 0.5:1 to 1:1.

Advantageously, the dye is a direct dye, soluble in water and in the humectant, allowing to obtain print marks which are non-toxic, of high optical intensity and high fastness towards the light.

The most advantageous dyes may be selected among the following: FASTUSOL SCHWARZ 18 L (BASF), a direct dye in a 30% solution, CORANIL DIREKT SCHWARZ MO EXTRA (Hoechst) (powder), KUNSTSIIDENECHTSCHWARZ B 300 EXTRA (Hoechst) (powder), DUASYN-DIREKTSCHWARZ H UFW or H SF (Hoechst) (powder), DUASYN-DIREKTSCHWARZ HEF UFW (Hoechst) (powder), KAYASET BLACK 008N or 008M or 032C or 009N (Nippon Kayaku), and mixtures of these dyes.

The dyes are preferably employed at concentrations of from 1 to 3% by weight. The pH-value of the ink shall be conveniently modified, depending upon the employed dye, to values from 7.5 to 11 by dosed addition of the pH-regulator.

As anti-mold preservations the following may be used: formalin, phenol derivatives and products commonly used in cosmetics, provided that they are soluble in water and in the humectant at weight concentrations from 0.1 to 0.3%, such as GERMALL 115 (Sutton Laboratories, Inc.), GERNAMIN (Hoechst) and ACTIDINE BG (Thor).

The ink may also contain a small amount of a conventional foam-depressant.

The ink is usually prepared in a plurality of successive passages by admixing at first, in a glass vessel, water and the humectant, and subsequently adding the anti-mold and anti-foam additives and the dye.

On completion of the dissolution, after about 2 hours under stirring, the pH is controlled and brought to the desired value. The ink prepared in this manner shall be ultra-filtered, for example by successive passages through filters of a porosity of $5\,\mu$ - $0.8\,\mu$ - $0.45\,\mu$ - $0.2\,\mu$. Suitable filters are commercialized by MILLIPORE INC. and are of synthetic material (ACROPOR). The ultrafiltration is effected at a pressure of 3 to 5 atmospheres.

The ultrafiltered ink is packaged, upon degassing, in sealed containers in the absence of air.

EXAMPLE 1

A glass vessel is charged with 91.0 g deionized water, into which 3.0 g polyethylene glycol (molecular weight 200) and 5.0 g solution of FASTUSOL SCHWARZ 18 L at 30% concentration are dissolved. Upon completion of the dissolution, 1.0 g formalin is added, stirring is continued for about 2 hours, monoethanolamine is additioned by small amounts until a pH = 8.0 is reached, whereupon ultrafiltration and packaging are effected.

This ink has a pH = 8.0, a density of 1.02 g/cm$^3$, a viscosity of 1.20 cPs at 20°C and a surface tension of 60.0 dine.cm.

The ink was tested on a wide variety of office papers in a selective ink-jet printer having piezoelectrically controlled jet nozzles of a diameter of about 60 $\mu$. The optical intensity of the printed marks, determined with Machbet Quantalog densitometer of KODAK, amounted to about 1.4. The marks were clear-cut and dried within 10 seconds. No clogging was observed after 90 hours of inactivity of the printer.

EXAMPLE 2

3.0 g polyethylene glycol (molecular weight 200) and 10.0 g solution of FASTUSOL SCHWARZ 18 L at 30% solids concentration are additioned to 80 g deionized water. Upon completion of the dissolution 1.0 g formalin is added. On completion of the dissolution the procedure of Example 1 is followed.

This ink has a pH = 7.8, a density 1.035 g/cm$^3$, a viscosity of 1.30 cPs at 20°C and a surface tension of 60.0 dine.cm.

The optical intensity and the drying time of the printed marks resulted substantially equal to those of the preceding example. No clogging of the nozzles was observed after 70 hours inactivity.

EXAMPLE 3

94 g demineralized water is additioned with 3 g polyethylene glycol (mol.wt. 200), 2 g DUASYN DIREKTSCHWARZ HSF and monoethanolamine sufficient to adjust the pH to 9.6. Upon complete dissolution, formalin is added. The features of the obtained ink are similar to those achieved in the preceding Examples. Clogging of the nozzles was not observed during 64 hours inactivity.

Results comparable with those referred to above were obtained by repeating the Examples 1-3 with the use of NaOH solution (0.1 N) and $Na_2CO_3$ solution (1 N) as pH-regulator in lieu of monoethanolamine.

CLAIMS:

1.      An ink for selective ink-jet printing, essentially consisting of an aqueous solution of a dye, a humectant, an anti-mold preserving agent and a pH-regulator, characterized in that the humectant is a polyglycol in a proportion not exceeding 3 wt.% referred to the weight of the ink, and the pH-regulator is an organic base, or the hydroxide or carbonate of an alkali metal, in a proportion conferring to the ink a pH of from 7.5 to 11.

2.      An ink according to claim 1, characterized in that the pH-regulator is monoethanolamine.

3.      An ink according to claim 1 or 2, characterized in that the polyglycol is a polyethylene glycol of a molecular weight of the order of 200.

4.      An ink according to any of the preceding claims, characterized in that its surface tension at 20°C is from 55 to 65 dine.cm.

5.      An ink according to any of the preceding claims, characterized in that the weight ratio water/humectant does not exceed 80:1.

6.      An ink according to any of the preceding claims, characterized in that the ratio dye/humectant is from 0.5 : 1 to 1:1.

7.      An ink according to any of the preceding claims, characterized in that the dye is a direct dye which is soluble in water and in the humectant.

8.      An ink according to claim 7, characterized in that the dye is selected from the group consisting of: FASTUSOL SCHWARZ 18 L; CORANIL DIREKT SCHWARZ MO EXTRA;

KUNSTSEIDENECHTSCHWARZ B 300 EXTRA; DUASYN-DIREKTSCHWARZ H UFW or HSF or HEF UFW; KAYASET BLACK OO8N or OO8M or O32C or OO9N, and mixtures thereof.